# EUROPEAN PATENT APPLICATION

(11) **EP 3 098 144 A1**
(43) Date of publication of application: **30.11.2016**
(21) Application number: 14880352.1
(22) Date of filing: 27.01.2014
(51) Int. Cl.: B62D 47/02, B62D 53/08, F16F 9/26, F16F 9/50

(54) **HYDRAULIC DAMPING CONTROL SYSTEM IN ARTICULATED BUS AND CORRESPONDING BUS ARTICULATION SYSTEM**

(30) Priority: 23.01.2014 CN 201410032147; 23.01.2014 CN 201410031896
(71) Applicant: Jointech (Suzhou) Vehicle System Co., Ltd., Suzhou, Jiangsu 215211 (CN)
(72) Inventor: HAO, Qingjun, Suzhou Jiangsu 215211 (CN)
(74) Representative: Dummett Copp LLP
(86) International application number: PCT/CN2014/071603
(87) International publication number: WO 2015/109611

(57) **Abstract**

Disclosed are a hydraulic damping control system in articulated bus and a corresponding bus articulation system , the hydraulic damping control system comprises a front frame (1), a rear frame (2), a sensing device (61,62;81,82) and a hydraulic damping device, wherein the front frame (1) rotates relative to the rear frame (2); the sensing device (61,62;81,82) are used for detecting the relative rotation angle between the front frame (1) and the rear frame (2), the hydraulic damping device provides damping control for the front frame (1) and the rear frame (2) according to values of the angle detected by the sensing device (61,62;81,82); and in the bus articulation system, the transmission between the front frame (1) and the rear frame (2) articulation system is conducted via rotating components (101,102) and a single sliding component (3). The bus articulation system for carrying out hydraulic damping control which adopts this structure articulation system can achieve multi-damping control only by adopting a gear rack transmission structure, so that the structure is compact and the space of articulation system is saved further, A hydraulic damping device is provided in an integrated block, so that the multi-damping control design enables the damping between the front frame and the rear frame to be different when the relative rotation angles between the front and rear frame are different; The hydraulic damping device is safe in use, and may not cause danger even if the system loses power.

## Description

### Field of Technology

The present invention relates to the technical field of articulated buses, specifically to a hydraulic damping control system in articulated bus and corresponding bus articulation system.

### Description of Related Arts

The articulated bus is a form of passenger car, and it is a passenger car which connects with two compartments by articulated means. As urban population gradually increased, more and more people take the bus, the average city bus can not meet the needs. People take the similar manner of the train, and the two buses are connected, so that the carrying capacity can be greatly increased. The articulated vehicle usually consists of two compartments, the front compartment and the rear compartment are connected by a chassis articulation system, the chassis articulation system includes a front frame, a rear frame, wheel bearings and a hydraulic damping device which provides damping, the front frame and the front compartment are connected fixedly by a front beam, the rear frame and the rear compartment are connected fixedly by a rear beam, the hydraulic damping device is critical for the performance of the vehicle, most of the existing hydraulic cushioning devices' structure are very complex and prone to leakage easily, at the same time , most of the structures are more complex, in addition, when the front compartment turns, different angle of rotation needs the rear compartment to rotate a different angle which is related to the front compartment in order to ensure normal driving.

### Summary of the Invention

The invention aims to overcome the disadvantages of the prior art described above and to provide a hydraulic damping control system in articulated bus and corresponding bus articulation system with compact structure and good cushioning effect, only using a single rack, with reliable transmission and being space-saving.

To achieve the above object, the articulated bus of the present invention in the hydraulic damping control system in articulated bus and corresponding bus articulation system uses the following technical solutions:
The hydraulic damping control system in articulated bus, is characterized in that, includes a front frame, a rear frame, a sensing device and a hydraulic damping device, the front frame is rotated relative to the rear frame, the sensing device is used for detecting a relative rotation angle between the front frame and the rear frame, the hydraulic damping device provides damping control for the front frame and the rear frame according to the angle which is detected by the sensing device, the hydraulic damping device comprises a single sliding member, both two ends of the sliding member are provided with a piston, the pistons extend into the corresponding cylinder barrel and the piston slides in the cylinder barrel.

The hydraulic damping control system in articulated bus is provided with a check valve within each piston, the corresponding cylinder barrel is divided into a rod chamber and a rodless chamber by each piston, a suction oil passage is formed between the rod chamber and the rodless chamber, the internal space of the front frame and the rear frame is formed as a reservoir oil plate, the reservoir oil plate connects the rod chamber.

The pistons of the hydraulic damping control system in articulated bus include a first piston and a second piston, the first piston slides in a respective first cylinder barrel, both sides of the first piston form a first suction oil passage by a check valve which is disposed in the first piston, the second piston slides in a respective second cylinder barrel, both sides of the first piston form a second suction oil passage by a check valve which is disposed in the second piston.

The first cylinder barrel of the hydraulic damping control system in articulated bus is connected to the inlet of a first check valve via a first oil discharge passage, the second cylinder barrel is connected to the inlet of a second check valve via a second oil discharge passage, a public pressure oil region is formed between the outlet of the outlets of the first check valve and the second check valve, the public pressure oil region is connected to a pressure control oil passage, the pressure control oil passage is connected to the reservoir oil plate via a return oil passage.

The pressure oil control passage of the hydraulic damping control system in articulated bus is a stepped multi-stage damping pressure control oil passage, the sensing device is a proximity switch sensor.

The proximity switch sensor of the hydraulic damping control system in articulated bus includes an annular sensor chip and a sensor, the sensor chip and the front frame are connected fixedly, the sensor and rear frame are connected fixedly.

The pressure control oil passage of the hydraulic damping control system in articulated bus is a proportional pressure control oil passage, the sensing device is a displacement sensor or an angle sensor.

The displacement sensor of the hydraulic damping control system in articulated bus includes an inductor and a magnet, the inductor and any cylinder head flange of the cylinder barrel are connected fixedly, and the magnet is fixed to the piston corresponding to the cylinder head flange.

The angle sensor of the hydraulic damping control system in articulated bus comprises an inductor and a magnet, the inductor and the rear frame are attached fixedly, the magnet and the front frame are attached fixedly.

The multi-stage damping pressure control oil passage of the hydraulic damping control system in articulated bus includes a first pressure control oil passage, a second pressure control oil passage, a third pressure control oil passage and a safety relief oil passage which are connected in parallel to each other, the first pressure control oil passage includes a solenoid directional valve and a first damping which are connected in series with each other, the second pressure control oil passage includes a second damping, the third pressure control oil passage includes a solenoid directional valve and a third damping which are connected in series, the safety relief oil passage includes a safety relief valve.

The second pressure control oil passage of the hydraulic damping control system in articulated bus forms a first stage damping control oil passage, the first pressure control oil passage and the second pressure control oil passage are connected in parallel to form a second stage damping control oil passage, the first pressure control oil passage, the second pressure control oil passage and the third pressure control oil passage are connected in parallel to form a third stage damping control oil passage;

When the angle value which is detected by the proximity switch sensor is set between zero and a first set angle value, hydraulic oil goes through the third stage damping control oil passage into the reservoir oil plate;

When the angle value which is detected by the proximity switch sensor is set between the first set angle value and a second set angle value, hydraulic oil goes through the second stage damping control oil passage into the reservoir oil plate;

When the angle value which is detected by the proximity switch sensor is set between the first set angle value and a second set angle value, hydraulic oil goes through the second stage damping control oil passage into the reservoir oil plate.

The proportional pressure control oil passage of the hydraulic damping control system in articulated bus includes a fourth pressure control oil passage, a fifth pressure control oil passage and a safety relief oil passage, the fourth pressure control oil passage includes a proportional relief valve, the fifth pressure control oil passage includes a damping and a solenoid directional valve, the safety relief oil passage includes a safety relief valve.

The public pressure oil region of the hydraulic damping control system in articulated bus is connected to a pressure sensor, under normal conditions, the electronic control system controls the proportional relief valve according the angle detected by the displacement sensor or the angle sensor, the fourth pressure control oil passage is in working condition, when the pressure value detected by the pressure sensor deviates from a predetermined value, the solenoid directional valve of the fifth pressure control oil passage loses power, and the fifth pressure control oil passage is in working condition.

A bus articulation system includes the hydraulic damping control system which is pointed above, is characterized in that, the front frame and the rear frame can be driven by a rotating member and a single sliding member, the rotating member is connected with the front frame.

The rotating member of the bus articulation system includes a great gear and an idler, the sliding member includes a rack assembly, the large gear is fixedly connected with the front frame, the large gear and the idler are engaged with each other, the idler is engaged with the rack assembly.

The great gear of the articulation system bus articulation system is a semi-annular gear.

The bus articulation system of the bus articulation system also comprises a manifold, the pressure control oil passage is integrated within the manifold, and the manifold is fixedly connected with any cylinder head flange of the cylinder barrel.

The front frame and the rear frame of the bus articulation system are connected by a wheel bearing, the wheel bearing includes a bearing outer ring and a bearing inner ring, the front frame and the bearing inner ring are connected fixedly, the rear frame and the bearing outer ring are connected fixedly.

The inner surface of the front frame of the bus articulation system is provided with a first seal groove, the first seal groove is annular, a front frame sealing ring is embedded in the first seal groove, the front frame seal ring is against the first seal groove and the bearing inner ring, the inner surface of the rear frame is provided with a second seal groove, the second seal groove is annular, a rear frame seal ring is embedded in the second seal groove, the rear frame seal ring is against the second seal groove and the bearing outer ring, the reservoir oil plate between the front frame and the rear frame is separated by a bearing inner ring and the bearing outer ring from the outside world.

One side of the rack assembly of the bus articulation system is used for engagement with the idler; the other side of the rack assembly is set with wear-resistant strips.

The cylinder barrel of the bus articulation system is disposed in the middle of the rear frame, the cylinder barrel and the rear frame are set as separate sets; or, the cylinder barrel and the rear frame are set as a whole set.

Taking this structure of the hydraulic damping control bus articulation system, only adopting one rack and pinion drive structure can realize multi-damping control, compact structure and can further save the space of articulation system, manifold is provided with the hydraulic damping device, the design of the multi-damping control makes the front frame and the rear frame can get different damping when the relative rotation angles between the front and rear frame are different; the hydraulic damping device is safe to use, even if the system lost power, and there will not be risk.

### Brief Description of the Drawings

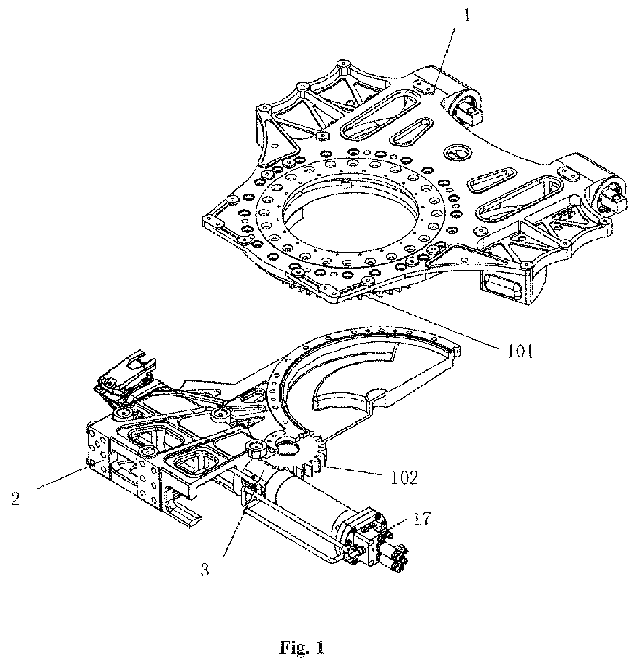

FIG. 1 is a schematic view of an articulation system of the present invention.

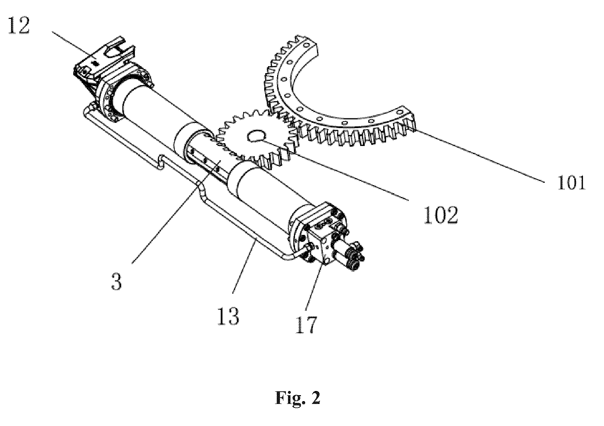

FIG. 2 is a schematic view of a great gear, an idler, and a rack assembly of the present invention.

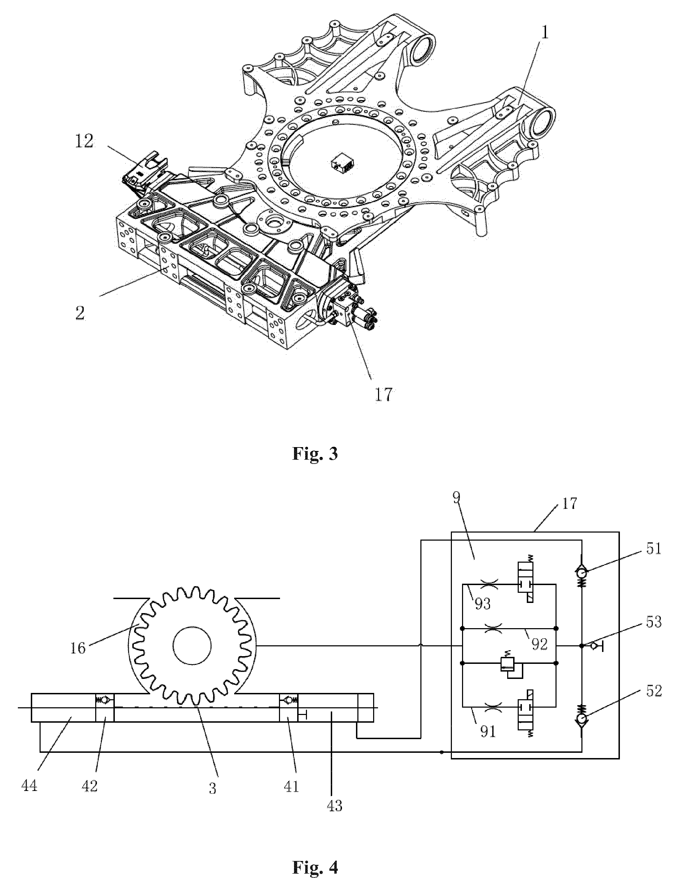

FIG. 3 is a schematic view of a front frame and a rear frame of the present invention.
FIG. 4 is a schematic view of a stepped multi-stage damping pressure control passage of the present invention.

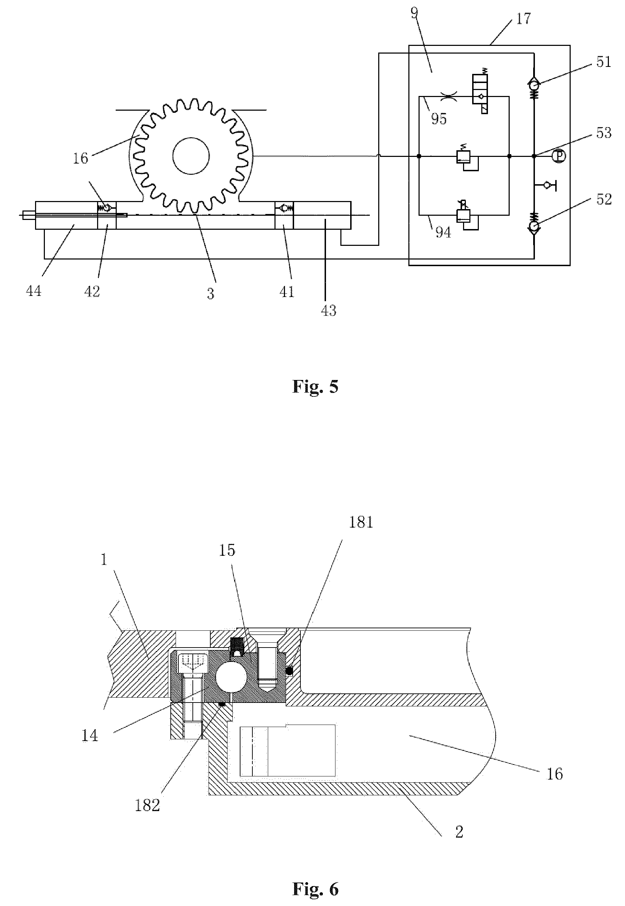

FIG. 5 is a schematic view of a proportional pressure control oil passage of the present invention.
FIG. 6 is a schematic view of the front frame and the rear frame sealing structure of the present invention.

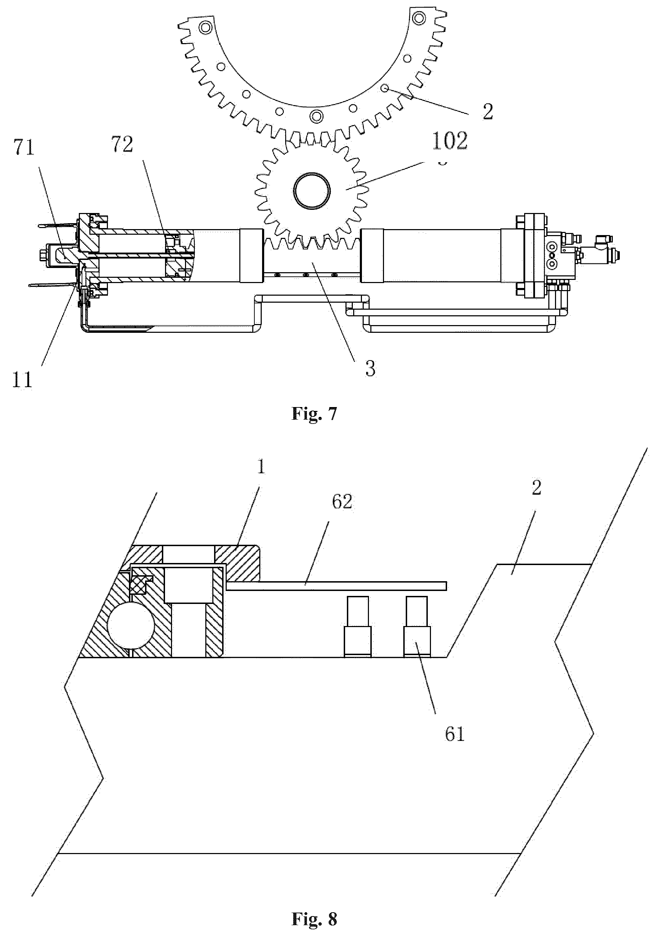

FIG. 7 is a schematic view of a displacement sensor of the present invention.
FIG. 8 is a schematic view of a proximity switch sensor of the present invention.

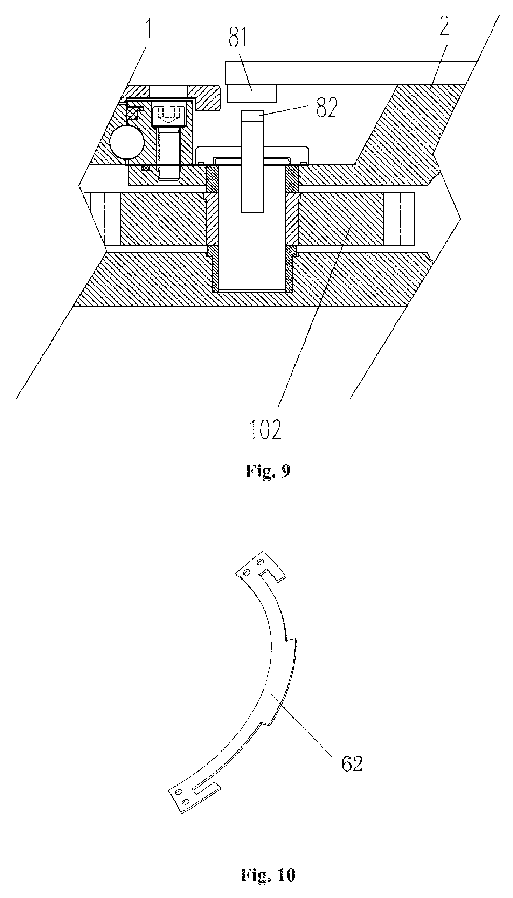

FIG. 9 is a schematic view of an angle sensor of the present invention.
FIG. 10 is a schematic view of a sensor chip of the present invention.

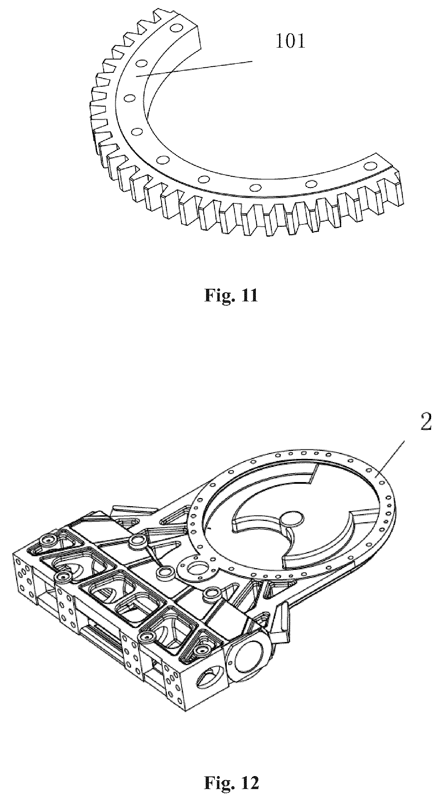

FIG. 11 is a schematic view of the great gear of the present invention.
FIG. 12 is a schematic view of the rear frame of the present invention.

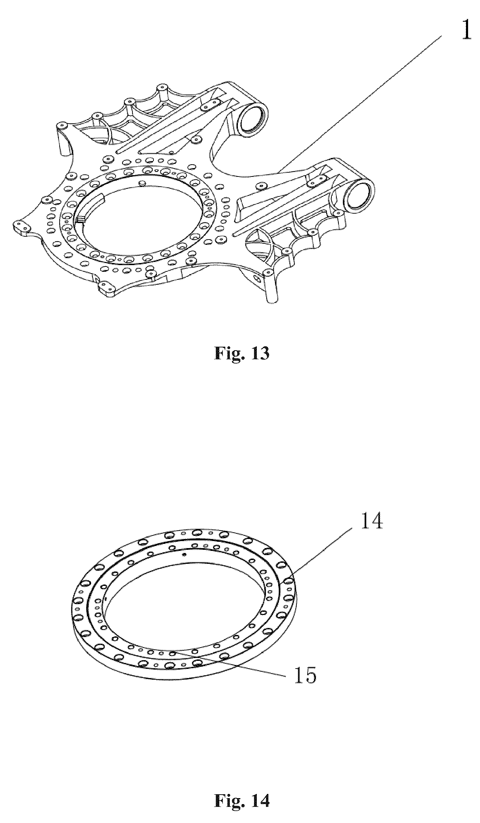

FIG. 13 is a schematic view of the front frame of the present invention.
FIG. 14 is a schematic view of a bearing of the present invention.

Reference numeral as follows:
- 1: front frame
- 2: rear frame
- 3: rack assembly
- 41: first piston
- 42: second piston
- 43: first cylinder barrel
- 44: second cylinder barrel
- 51: first check valve
- 52: second check valve
- 53: public pressure oil region
- 61: sensor
- 62: sensor chip
- 71: inductor
- 72: magnet
- 81: inductor
- 82: magnet
- 9: pressure control oil passage
- 91: first pressure control oil passage
- 92: second pressure control oil passage
- 93: third pressure control oil passage
- 94: fourth pressure control oil passage
- 95: fifth pressure control oil passage
- 101: large gear
- 102: idler
- 11: cylinder head flange
- 12: electronic control system
- 13: hard hydraulic tube assembly
- 14: bearing outer ring
- 15: bearing inner ring
- 16: reservoir oil plate
- 17: manifold
- 181: sealing ring of front frame
- 182: sealing ring of rear frame

### Detailed Description of the Preferred Embodiment

In order to understand the technical content of the present invention more clearly, cite the following description of embodiments in detail.

Please refer to the figures, the hydraulic damping control system in articulated bus includes a front frame 1, a rear frame 2, a sensing devices and a hydraulic damping device, the front frame 1 is rotated relative to the rear frame 2, the sensing device is used for detecting a relative rotation angle between the front frame 1 and the rear frame 2, the hydraulic damping device provides damping control for the front frame 1 and the rear frame 2 according to the angle which is detected by the sensing device, the hydraulic damping device comprises a single sliding member, both two ends of the sliding member are provided with a piston, the pistons extend into the corresponding cylinder barrel and the piston slides in the cylinder barrel. The front frame 1 is used for attaching the front compartment of articulated bus fixedly, the rear frame 2 is used for attaching the rear compartment of articulated bus fixedly, when the front compartment turns relative to the rear compartment, and the hydraulic damping control system provides the damping control for it.

### The Process of Oil Cycle:

reservoir oil plate → suction oil passage → oil discharge passage → public pressure oil region → pressure control oil passage → return oil passage → reservoir oil plate

It is provided with a check valve within each piston, the corresponding cylinder barrel is divided into a rod chamber and a rodless chamber by each piston, a suction oil passage is formed between the rod chamber and the rodless chamber, the internal space of the front frame 1 and the rear frame 2 is formed as a reservoir oil plate 16, the reservoir oil plate 16 connects the rod chamber.
The reservoir oil plate 16 are separated by a seal structure with the outside world.

The piston includes a first piston 41 and a second piston 42, the first piston 41 slides in a respective first cylinder barrel 43, both sides of the first piston 41 form a first suction oil passage by the check valve which is disposed in the first piston, the second piston 42 slides in a respective second cylinder barrel 44, both sides of the second piston 42 form a second suction oil passage by the check valve which is disposed in the second piston.

The first cylinder barrel 43 is connected to the inlet of a first check valve 51 via a first oil discharge passage, the second cylinder barrel 44 is connected to the inlet of a second check valve 52 via a second oil discharge passage, a public pressure oil region 53 is formed between the outlet of the first check valve 51 and the outlet of the second check valve 52, the public pressure oil region 53 is connected to a pressure control oil passage 9, the pressure control oil passage 9 is connected to the reservoir oil plate 16 via a return oil passage.

### Stepped Multi-stage Damping Pressure Control Passage

The pressure oil control passage 9 is a stepped multi-stage damping pressure control oil passage, and the sensing device is a proximity switch sensor.
1. The proximity switch sensor includes an annular sensor chip 62 and a sensor 61, the sensor chip 62 and the front frame 1 are connected fixedly, and the sensor 61 and rear frame 2 are connected fixedly.

The multi-stage damping pressure control oil passage includes a first pressure control oil passage 91, a second pressure control oil passage 92, a third pressure control oil passage 93 and a safety relief oil passage which are connected in parallel to each other, the first pressure control oil passage 91 includes a solenoid valve and a first damping which are connected in series with each other, the second pressure control oil passage 92 includes a second damping, the third pressure control oil passage 93 includes a solenoid valve and a third damping which are connected in series, the safety relief oil passage includes a safety relief valve.

The second pressure control oil passage 92 forms a first stage damping control oil passage, the first pressure control oil passage 91 and the second pressure control oil passage 92 are connected in parallel to form a second stage damping control oil passage, the first pressure control oil passage 91, the second pressure control oil passage 92 and the third pressure control oil passage 93 are connected in parallel to form a third stage damping control oil passage.

When the angle value which is detected by the proximity switch sensor is set between zero and a first set angle value, hydraulic oil goes through the third stage damping control oil passage into the reservoir oil plate 16;

When the angle value which is detected by the proximity switch sensor is set between the first set angle value and a second set angle value, hydraulic oil goes through the second stage damping control oil passage into the reservoir oil plate 16;

When the angle value which is detected by the proximity switch sensor is set between the first set angle value and a second set angle value, hydraulic oil goes through the second stage damping control oil passage into the reservoir oil plate 16.

### Proportional Pressure Control Oil Passage

The pressure control oil passage is a proportional pressure control oil passage, and the sensing device is a displacement sensor or an angle sensor.
1. The displacement sensor includes an inductor 71 and a magnet 72, the inductor 71 and any cylinder head flange of the cylinder barrel 11 are connected fixedly, and the magnet 72 is fixed to the piston corresponding to the cylinder head flange 11.
2. The angle sensor comprises an inductor 81 and a magnet 82, the inductor 81 and the rear frame 2 are attached fixedly, the magnet 82 and the front frame 1 are attached fixedly.

The proportional pressure control oil passage includes a fourth pressure control oil passage 94, a fifth pressure control oil passage 95 and a safety relief oil passage, the fourth pressure control oil passage 94 includes a proportional relief valve, the fifth pressure control oil passage 95 includes a damping and a solenoid directional valve, the safety relief oil passage includes a safety relief valve.

The public pressure oil region 53 is connected to a pressure sensor, under normal conditions, the electronic control system 12 controls the proportional relief valve according the angle detected by the displacement sensor or the angle sensor, the fourth pressure control oil passage 94 is in working condition, when the pressure value detected by the pressure sensor deviates from a predetermined value, the solenoid valve of the fifth pressure control oil passage 95 loses power, and the fifth pressure control oil passage 95 is in working condition.

The front frame 1 and the rear frame 2 can be driven by a rotating member and a single sliding member, the rotating member is connected with the front frame 1.

The rotating member includes a great gear 101 and a idler 102, the sliding member includes a rack assembly 3, the large gear 101 is fixedly connected with the front frame 1, the large gear 101 and the idler 102 are engaged with each other, and the idler 102 are engaged with the rack assembly 3. The great gear 101 can be a semi-annular gear.

The bus articulation system also comprises a manifold 17, the pressure control oil passage 9 is integrated within the manifold 17, and the manifold 17 is fixedly connected with any cylinder head flange of the cylinder barrel 11. Two cylinder barrels are connected with the manifold 17 via the hard hydraulic tube assembly 13.

### The Method of the Front Frame and the Rear Frame Sealing are as Follows:

The front frame 1 and the rear frame 2 are connected by a wheel bearing, the wheel bearing includes a bearing outer ring 14 and a bearing inner ring 15, the front frame 1 and the bearing inner ring 15 are connected fixedly, the rear frame 2 and the bearing outer ring 14 are connected fixedly. The inner surface of the front frame 1 is provided with a first seal groove, the first seal groove is annular, a front frame sealing ring 181 is embedded in the first seal groove, the front frame seal ring 181 is against the first seal groove and the bearing inner ring 15, the inner surface of the rear frame 1 is provided with a second seal groove, the second seal groove is annular, a rear frame seal ring 182 is embedded in the second seal groove, the rear frame seal ring is against the second seal groove and the bearing outer ring 14, the reservoir oil plate 16 between the front frame 1 and the rear frame 2 is separated by a bearing inner ring 15 and the bearing outer ring 14 from the outside world.

One side of the rack assembly 3 is used for engagement with the idler 102; the other side of the rack assembly 3 is set with wear-resistant strips.

The two cylinder barrels are disposed in the middle of the rear frame 2, the cylinder barrel and the rear frame are set as separate sets; or, the cylinder barrel and the rear frame 2 are set as a whole set.

Under normal circumstances of articulation system power supply, the solenoid directional valve is energized when the fifth pressure control oil passage 95 is disconnected; the pressure of the hydraulic damping system is set via the proportional relief valve of the fourth pressure control oil passage 94. At this time, the pressure value of the hydraulic damping system is changed according to changes in vehicle speed and steering angle varies, each speed -angle obtain a corresponding pressure value, the electronic control system 12 is sending a current signal to the proportional relief valve to control the setting of this pressure value of the proportional relief valve matching the current pressure value according to the received vehicle speed signal and the angle signal. The vehicle speed signal is provided by the vehicle, the displacement signal of the displacement sensor or the angle sensor is obtained after conversion. The pressure sensor monitors pressure value controlling generated by the proportional relief valve, when the pressure value is detected deviates from a predetermined value at a certain pressure range, the electronic control system 12 sends alarm signal to the vehicle, at the same time, cuts the power of the solenoid directional valve and proportional relief valve, the pressure control oil passage is switched to the fifth pressure control oil passage 95 from the fourth pressure control oil passage 94. If the articulation system power is down for any reason, the solenoid directional valve and the proportional relief valve lose power; the pressure control oil passage is switched to the fourth pressure control oil passage 94 from the fifth pressure control oil passage 95. Regardless of hydraulic damping system pressure is controlled by the fourth pressure control oil passage 94, or by the pressure control oil passage 95, if the pressure value of the hydraulic damping system is up to the pressure value set by the safety relief valve of the safety relief oil passage, then the safety relief valve is open, at this time, if the pressure value of the hydraulic damping system maintains the pressure value set by the safety relief valve, it will play the security role to the buffer system. Hydraulic oil will back to the reservoir oil plate 16 in the way of the low pressure oil after going through the control oil passage.

Both two of cylinder barrels are full of hydraulic oil when hydraulic damping system is in working state, and in the reservoir oil plate 16, air and hydraulic oil are present at the same time, and the hydraulic oil and the air are in certain proportions. The hydraulic oil and air is distributed proportionally, so when the cylinder barrel are full of hydraulic oil, the oil level within the reservoir oil plate 16 completely covers the oil suction hole on the piston, at the same time, air volume ratio is not less than a certain percentage of the oil pan volume as a criterion. Oiling of hydraulic buffer is divided into two ways of pressure oil and suction.

### The Operation of Oiling Pressure Oil's Mode:

The oil pump set a certain pressure when the buffer system powered is down totally, transport hydraulic oil to the fuel inlet and open the exhaust vent so that the air emissions from reservoir oil plate and hydraulic tube, when the exhaust vent emit hydraulic oil with no air bubbles, close the fuel inlet, open the exhaust vent, turn the front frame of articulation system, driving a large gear, rack assembly slides in the cylinder barrel, proportional hydraulic oil is discharged from the exhaust vent, while the corresponding proportion of air is inhaled, close the exhaust vent, hydraulic buffer system fuel injection is completed.

### The Operation of Oiling Suction's Mode:

The oiling port connects high fuel tank when buffer system is powered down totally. By continuously rotating the front frame articulation system, the piston slides in the cylinder barrel, to create a vacuum, so the hydraulic oil is inhaled into the reservoir oil plate.

Taking this structure of hydraulic damping control bus articulation system, multi-damping control can be achieved by only adopting one gear rack drive mechanism, the structure is compact and it can further save the space of articulation system, the manifold is provided with the hydraulic damping device, the design of the multi-damping control make the front frame and the rear frame can get different damping when the relative rotation angle between the front and rear frame are different; the hydraulic damping device safe to use, even if the system lost power, and it will not risk.

In this specification, the present invention has been described in terms of its specific embodiments. However, it is obvious that various modifications and variations still may be made without departing from the spirit and scope of the invention. Accordingly, the specification and drawings are to be regarded as illustrative rather than restrictive.

## Claims

1. A hydraulic damping control system in articulated bus, is **characterized in that**, includes a front frame, a rear frame, a sensing device and a hydraulic damping device, the front frame is rotated relative to the rear frame, the sensing device is used for detecting a relative rotation angle between the front frame and the rear frame, the hydraulic damping device provides damping control for the front frame and the rear frame according to the angle which is detected by the sensing device, the hydraulic damping device comprises a single sliding member, both two ends of the sliding member are provided with a piston, the pistons extend into the corresponding cylinder barrel and the piston slides in the cylinder barrel.

2. The hydraulic damping control system in articulated bus according to claim 1, **characterized in that**, a check valve is provided within each piston, the corresponding cylinder barrel is divided into a rod chamber and a rodless chamber by each piston, a suction oil passage is formed between the rod chamber and the rodless chamber, the internal space of the front frame and the rear frame is formed as a reservoir oil plate, the reservoir oil plate connects the rod chamber.

3. The hydraulic damping control system in articulated bus according to claim 2, **characterized in that**, the pistons include a first piston and a second piston, the first piston slides in a respective first cylinder barrel, both sides of the first piston form a first suction oil passage by a check valve which is disposed in the first piston, the second piston slides in a respective second cylinder barrel, both sides of the first piston form a second suction oil passage by a check valve which is disposed in the second piston.

4. The hydraulic damping control system in articulated bus according to claim 3, **characterized in that**, the first cylinder barrel is connected to the inlet of a first check valve via a first oil discharge passage, the second cylinder barrel is connected to the inlet of a second check valve via a second oil discharge passage, a public pressure oil region is formed between the outlet of the outlets of the first check valve and the second check valve, the public pressure oil region is connected to a pressure control oil passage, the pressure control oil passage is connected to the reservoir oil plate via a return oil passage.

5. The hydraulic damping control system in articulated bus according to claim 4, **characterized in that**, the pressure oil control passage is a stepped multi-stage damping pressure control passage, the sensing device is a proximity switch sensor.

6. The hydraulic damping control system in articulated bus according to claim 5, **characterized in that**, the proximity switch sensor includes an annular sensor chip and a sensor, the sensor chip and the front frame are connected fixedly, the sensor and rear frame are connected fixedly.

7. The hydraulic damping control system in articulated bus according to claim 4, **characterized in that**, the pressure control oil passage is a proportional pressure control oil passage, the sensing device is a displacement sensor or an angle sensor.

8. The hydraulic damping control system in articulated bus according to claim 7, **characterized in that**, the displacement sensor includes an inductor and a magnet, the inductor and any cylinder head flange of the cylinder barrel are connected fixedly, the magnet is fixed to the piston corresponding to the cylinder head flange.

9. The hydraulic damping control system in articulated bus according to claim 7, **characterized in that**, the angle sensor comprises an inductor and a magnet, the inductor and the rear frame are attached fixedly, the magnet and the front frame are attached fixedly.

10. The hydraulic damping control system in articulated bus according to claim 6, **characterized in that**, the multi-stage damping pressure control oil passage includes a first pressure control oil passage, a second pressure control oil passage, a third pressure control oil passage and a safety relief oil passage which are connected in parallel to each other, the first pressure control oil passage includes a solenoid directional valve and a first damping which are connected in series with each other, the second pressure control oil passage includes a second damping, the third pressure control oil passage includes a solenoid directional valve and a third damping which are connected in series, the safety relief oil passage includes a safety relief valve.

11. The hydraulic damping control system in articulated bus according to claim 10, **characterized in that**, the second pressure control oil passage forms a first stage damping control oil passage, the first pressure control oil passage and the second pressure control oil passage are connected in parallel to form a second stage damping control oil passage, the first pressure control oil passage, the second pressure control oil passage and the third pressure control oil passage are connected in parallel to form a third stage damping control oil passage.

12. The hydraulic damping control system in articulated bus according to claim 11, **characterized in that**:
When the angle value which is detected by the proximity switch sensor is set between zero and a first set angle value, hydraulic oil goes through the third stage damping control oil passage into the reservoir oil plate.
When the angle value which is detected by the proximity switch sensor is set between the first set angle value and a second set angle value, hydraulic oil goes through the second stage damping control oil passage into the reservoir oil plate.
When the angle value which is detected by the proximity switch sensor is set between the first set angle value and a second set angle value, hydraulic oil goes through the second stage damping control oil passage into the reservoir oil plate.

13. The hydraulic damping control system in articulated bus according to claim 7, **characterized in that**, the proportional pressure control oil passage includes a fourth pressure control oil passage, a fifth pressure control oil passage and a safety relief oil passage, the fourth pressure control oil passage includes a proportional relief valve, the fifth pressure control oil passage includes a damping and a solenoid directional valve, the safety relief oil passage includes a safety relief valve.

14. The hydraulic damping control system in articulated bus according to claim 13, **characterized in that**, the public pressure oil region is connected to a pressure sensor, under normal conditions, the electronic control system controls the proportional relief valve according the angle detected by the displacement sensor or the angle sensor, the fourth pressure control oil passage is in working condition, when the pressure value detected by the pressure sensor deviates from a predetermined value, the solenoid directional valve of the fifth pressure control oil passage loses power, and the fifth pressure control oil passage is in working condition.

15. A bus articulation system includes the hydraulic damping control system according to claim 1, **characterized in that**, the front frame and the rear frame can be driven by a rotating member and a single sliding member, the rotating member is connected with the front frame.

16. The bus articulation system according to claim 15, **characterized in that**, the rotating member includes a large gear and an idler, the sliding member includes a rack assembly, the large gear is fixedly connected with the front frame, the large gear and the idler are engaged with each other, the idler is engaged with the rack assembly.

17. The bus articulation system according to claim 16, **characterized in that**, the great gear is a semi-annular gear.

18. The bus articulation system according to claim 15, **characterized in that**, the bus articulation system also comprises a manifold, the pressure control oil passage is integrated within the manifold, the manifold is fixedly connected with any cylinder head flange of the cylinder barrel.

19. The bus articulation system according to claim 15, is **characterized in that**, the front frame and the rear frame are connected by a wheel bearing, the wheel bearing includes a bearing outer ring and a bearing inner ring, the front frame and the bearing inner ring are connected fixedly, the rear frame and the bearing outer ring are connected fixedly.

20. The bus articulation system according to claim 19, **characterized in that**, the inner surface of the front frame is provided with a first seal groove, the first seal groove is annular, a front frame sealing ring is embedded in the first seal groove, the front frame seal ring is against the first seal groove and the bearing inner ring, the inner surface of the rear frame is provided with a second seal groove, the second seal groove is annular, a rear frame seal ring is embedded in the second seal groove, the rear frame seal ring is against the second seal groove and the bearing outer ring, the reservoir oil plate between the front frame and the rear frame is separated by a bearing inner ring and the bearing outer ring from the outside world.

21. The bus articulation system according to claim 16, **characterized in that**, one side of the rack assembly is used for engagement with the idler, the other side of the rack assembly is set with wear-resistant strips.

22. The bus articulation system according to claim 18, **characterized in that**, the cylinder barrel is disposed in the middle of the rear frame, the cylinder barrel and the rear frame are set as separate sets; or, the cylinder barrel and the rear frame are set as a whole set.
